(19) Europäisches Patentamt

European Patent Office

Office européen des brevets

(11) **EP 1 555 182 B1**

(12) **FASCICULE DE BREVET EUROPEEN**

(45) Date de publication et mention
de la délivrance du brevet:
**15.11.2006 Bulletin 2006/46**

(51) Int Cl.:
***B60T 8/00*** (2006.01)

(21) Numéro de dépôt: **05000245.0**

(22) Date de dépôt: **07.01.2005**

(54) **Système de contrôle de la stabilité d'un véhicule utilisant un algorithme analysant la variation au cours du temps d'un paramètre représentatif**

System zur Stabilitätsregelung eines Fahrzeugs mit einem Algorithmus zur Schätzung der zeitlichen Änderung eines repräsentativen Parameters

System for controlling vehicle stability using an algorithm for analysing the time variation of a representative parameter

(84) Etats contractants désignés:
**AT BE BG CH CY CZ DE DK EE ES FI FR GB GR HU IE IS IT LI LT LU MC NL PL PT RO SE SI SK TR**

(30) Priorité: **16.01.2004 FR 0400426**

(43) Date de publication de la demande:
**20.07.2005 Bulletin 2005/29**

(73) Titulaires:
• **Société de Technologie Michelin**
**63000 Clermont-Ferrand (FR)**
• **MICHELIN Recherche et Technique S.A.**
**1763 Granges-Paccot (CH)**
• **ROBERT BOSCH GMBH**
**70442 Stuttgart (DE)**

(72) Inventeurs:
• **Fangeat, Nicolas**
**63400 Chamalieres (FR)**
• **Levy, Georges**
**Chiyoda-Ku**
**102-8176 Tokyo (JP)**

(74) Mandataire: **Bauvir, Jacques**
**M. F. P. MICHELIN**
**23, place des Carmes Dechaux**
**SGD/LG/PI - F35 - Ladoux**
**63040 Clermont-Ferrand Cedex 09 (FR)**

(56) Documents cités:
**EP-A- 1 371 534**     **EP-A- 1 372 049**
**US-A- 6 015 192**     **US-B1- 6 233 505**

EP 1 555 182 B1

## Description

### DOMAINE DE L'INVENTION

La présente invention se rapporte aux systèmes de pilotage de stabilité d'un véhicule. Dans une application particulière, l'invention se rapporte aux systèmes visant à éviter le blocage des roues lors de freinages appuyés, popularisée sous la désignation « ABS ». Plus généralement, l'invention concerne tous les systèmes visant à maintenir le véhicule sur une trajectoire stable en agissant automatiquement sur des actuateurs comme ceux déterminant un couple moteur ou freineur aux roues, ou ceux déterminant le braquage d'une ou de plusieurs roues, ou même ceux concernant la suspension, dont on sait que cela a aussi avoir un effet sur le contrôle de la trajectoire (par exemple antiroulis actif). Dans l'application particulière évoquée ci-dessus, les actuateurs sont les freins d'une roue ou l'organe imposant un couple moteur à une roue.

### ETAT DE LA TECHNIQUE

Pour rappel, le coefficient d'adhérence longitudinale $\mu$ du pneumatique est le quotient de la force longitudinale divisée par la force verticale appliquée, c'est à dire la charge appliquée sur le pneumatique (dans le cas simplifié d'un effort de freinage pur et l'homme du métier saura facilement généraliser) ; le glissement G du pneumatique vaut G = 0% lorsqu'il n'y a pas de glissement entre la vitesse du pneumatique et la vitesse du véhicule, c'est à dire si le pneu roule librement, et G = 100% si le pneu est bloqué en rotation. Typiquement, en fonction de l'environnement (nature du sol (asphalte, béton), sec ou mouillé (hauteur d'eau), température et niveau d'usure du pneumatique), la valeur de $\mu$ en fonction du glissement G et de la nature du sol peut varier énormément vaut environ 0.15 sur de la glace et environ 1.2 sur un sol sec).

On sait que le freinage d'un véhicule sera d'autant plus efficace que l'on parviendra à faire fonctionner la bande de roulement à un glissement G correspondant à la valeur maximale du coefficient d'adhérence (parfois aussi appelé coefficient de frottement). On appelle $\mu_{max}$ la valeur maximale du coefficient d'adhérence. Mais le conducteur moyen n'est pas capable de doser le freinage de façon à satisfaire à cette condition.

C'est la raison pour laquelle ont été développés des systèmes de contrôle de la stabilité d'un véhicule modulant automatiquement la force de freinage de façon à viser une cible de glissement prédéterminée, censée correspondre au maximum du coefficient d'adhérence.

En particulier, la demande de brevet EP 1371534 publiée le 17 décembre 2003 propose un procédé de régulation du glissement utilisant une grandeur appelée « Invariant » que les recherches des inventeurs ont permis de découvrir, cette grandeur étant ainsi appelée parce qu'elle est sensiblement constante quel que soit le pneu considéré et quelle que soit l'adhérence du sol sur lequel le pneu roule.

Si ce procédé permet de déterminer une cible de glissement pour lequel on est effectivement bien plus proche du coefficient d'adhérence maximal réel du pneu dans les circonstances de roulage réelles, il existe cependant des cas où l'on peut déterminer une cible meilleure encore pour améliorer l'efficacité du freinage (ou de l'accélération).

### BREVE DESCRIPTION DE L'INVENTION

L'invention propose un algorithme appelé « Mouillé » permettant de prédire une cible idéale pour un paramètre dont on assure le pilotage dans un système de contrôle de la stabilité d'un véhicule.

Dans une formulation générale, l'invention propose un système de contrôle de la stabilité d'un véhicule dans lequel un paramètre caractéristique Q du fonctionnement d'un pneumatique du véhicule destiné à rouler sur un sol varie en fonction d'un paramètre P selon une certaine loi, une valeur optimale dudit paramètre P étant imposée par un contrôleur de manière directe ou indirecte de façon à agir sur au moins l'un des éléments choisis dans le groupe comportant le couple de rotation appliqué au pneumatique, l'angle de braquage du pneumatique, l'angle de carrossage du pneumatique et la force verticale appliquée au pneumatique, dans lequel le contrôleur comporte des moyens pour :

- Au fur et à mesure de l'acquisition des valeurs de $P_i$, calculer la variation par rapport au temps de P,
- Tant que ladite variation est supérieure à un seuil bas, calculer des coefficients $A_{[wet, p]}$ par calcul direct ou par une régression appropriée de façon à modéliser la variation par rapport au temps de P par une courbe de variation qui est une fonction de $(P_i, A_{[wet, p]})$,
- Dès que ladite variation est supérieure à un seuil haut, déterminer un glissement cible $P^{Cwet}$ en utilisant au moins les dernières valeurs de $A_{[wet, p]}$.

Le résultat recherché est de maintenir la valeur d'un paramètre Q à une valeur choisie comme étant idéale dans la situation du véhicule du moment. Dans le présent mémoire, on décrit en détails une application au contrôle du glissement d'un pneu, typiquement pendant une manoeuvre de freinage ou pendant une manoeuvre agissant sur le lacet d'un véhicule (fonction connue sous le nom d'ABS dans le premier cas ou fonction connue sous le nom d'ESP dans le second cas). Enfin, on évoque une application visant au contrôle de la trajectoire en utilisant des actuateurs autres que ceux agissant sur le couple aux roues.

Dans une première application, l'invention propose donc un système de contrôle de la stabilité d'un véhicule dans lequel le paramètre P est le glissement G du pneumatique et le paramètre caractéristique Q est le coefficient d'adhérence $\mu$ du pneumatique, le système comportant des moyens pour imprimer au pneu un effort longitudinal, des moyens de modulation de l'effort longitudinal et des moyens pour calculer le paramètre glissement $G^{Opt}$ lors de chaque activation des moyens pour imprimer au pneu un effort longitudinal de la façon suivante :

- Au fur et à mesure de l'acquisition des valeurs de $G_i$, calculer la variation par rapport au temps de G,
- Tant que ladite variation est supérieure à un seuil bas, calculer des coefficients $A_{[wet, p]}$ par calcul direct ou par une régression appropriée de façon à modéliser la variation par rapport au temps de G par une courbe de variation qui est une fonction de ($G_i$, $A_{[wet, p]}$),
- Dès que ladite variation est supérieure à un seuil haut, déterminer un glissement cible $G^{Cwet}$ en utilisant au moins les dernières valeurs de $A_{[wet, p]}$.

L'application de choix de la présente invention réside dans le pilotage du glissement d'une roue en freinage, dans le but de faire fonctionner le pneu au niveau où le coefficient d'adhérence est maximal. Toute la description suivante concerne dans ce cas un dispositif de modulation de l'effort longitudinal qui agit sur la commande de freinage. Indiquons une fois pour toutes que dans ce cas, on initialise (i=0) les opérations indiquées ci-dessus, et plus en détails ci-dessous, à chaque début de manoeuvre de freinage. Mais si l'on décide d'appliquer la présente invention au pilotage du glissement d'une roue en accélération, le dispositif de modulation de l'effort longitudinal agit sur le couple moteur aux roues et on initialise (i=0) les opérations indiquées à chaque demande de variation du couple moteur supérieure à un seuil de couple prédéterminé.

Notons aussi que, dans le contexte de la présente invention, peu importe que la bande de roulement dont on traite la caractéristique d'adhérence soit celle d'un pneumatique ou d'un bandage élastique non pneumatique ou encore d'une chenille. Les termes « bande de roulement », « pneu » ou « pneumatique », « bandage », « bandage élastique », « chenille » ou même « roue » doivent être interprétés comme équivalents. Remarquons aussi que la détermination des valeurs du coefficient d'adhérence $\mu_i$, pour chaque glissement $G_i$ peut se faire par mesure directe ou par estimation à partir d'autres mesures ou de l'estimation d'autres grandeurs comme l'effort dans le plan du sol et la charge verticale.

BREVE DESCRIPTION DES FIGURES

Les figures suivantes montrent :

La figure 1 illustre l'algorithme Mouillé ;
La figure 2 illustre un traitement particulier des premières acquisitions de mesures ou d'estimations ;
La figure 3 illustre plus en détails ledit traitement particulier ;
La figure 4 illustre un autre traitement particulier des acquisitions de mesures ou d'estimations.

DESCRIPTION DU MEILLEUR MODE DE REALISATION DE L'INVENTION

Comme son nom l'indique, cet algorithme est plus particulièrement conçu pour le calcul de cible sur sol mouillé (en fait tous les sols de faible adhérence). En effet, sur ce type de sol, la roue va très rapidement au blocage et l'on risque de s'apercevoir trop tard que le maximum de la courbe $\mu(G)$ est dépassé.

Le principe de cet algorithme consiste à étudier l'évolution de la dérivée du glissement en fonction du temps. Si l'on constate une évolution trop rapide, c'est à dire en fait un changement du glissement trop rapide, on peut présumer que le système n'est plus stable parce que l'on a dépassé ou l'on est en passe de dépasser le glissement correspondant à l'adhérence maximale.

De préférence, ledit algorithme n'est utilisé qu'avec des valeurs de glissement supérieures à de 4%. De façon avantageuse, ledit seuil bas est de l'ordre de 100% par seconde et ledit seuil haut est de l'ordre de 300% par seconde.

Une application simple de cet algorithme utilise une régression linéaire, ce qui fait que l'on calcule des coefficients $A_{wet}$ et $B_{wet}$ de la façon suivants :

•

$$\frac{dG}{dt} = A^{WET} \cdot G + B^{WET}$$

et le glissement cible $G^{Cwet}$ est donc déterminé de la façon suivante :

$$G^{Cwet} = \frac{dG\_tgt - B^{WET}}{A^{WET}}.$$

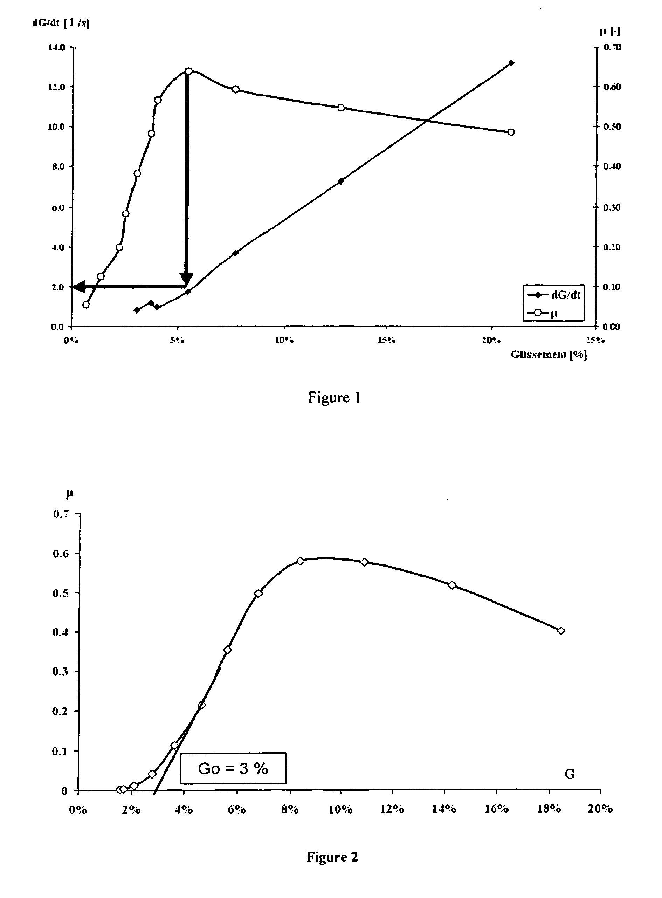

Bien qu'une valeur expérimentale de 200% par seconde (voir figure 1) pour le paramètre « dG_tgt » ait donné de bons résultats, on peut en pratique utiliser arbitrairement ce paramètre comme un bouton de réglage fin du fonctionnement pratique du système de contrôle de la stabilité d'un véhicule, tout comme évoqué à propos des paramètres $\beta$ et Invariant.

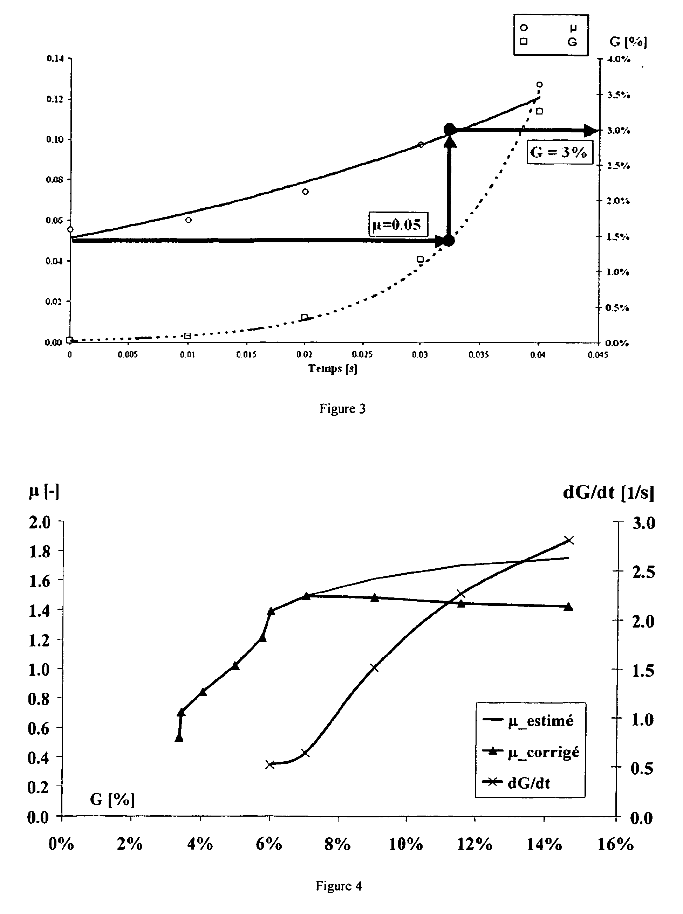

Il est proposé ci-dessous quelques corrections aux valeurs faibles de glissement et coefficient d'adhérence obtenues au tout début d'une manoeuvre de freinage. Au début des freinages, il a été constaté que la courbe $\mu(G)$ peut présenter un comportement étrange. Le but de cette première partie de l'algorithme est de corriger ce comportement. Aux figures 2 et 3, on peut voir que sur un sol mouillé, le pied de la courbe $\mu(G)$ ne semble pas linéaire et que pour un $\mu$ nul, le glissement ne l'est pas. Ceci est probablement dû aux erreurs dans la valeur du glissement mesuré. Cela n'est à l'évidence pas représentatif des phénomènes physiques dans le contact de la bande de roulement sur le sol. Cela est gênant pour les algorithmes de calcul du glissement cible qui sont basés sur l'étude de la pente de la courbe $\mu(G)$. Bien entendu, cela est très dépendant des moyens technologiques concrets mis en oeuvre sur le véhicule pour acquérir ces informations. Dès lors, les indications fournies dans ce contexte sont de simples suggestions qu'il est utile d'appliquer si l'on fait face à ce problème, mais qui ne sont pas limitatives. Plus généralement, il est utile de corriger autoritairement la forme du pied de la courbe de variation du coefficient d'adhérence en fonction du glissement si elle présente une allure fort peu plausible.

La première partie du traitement des données va donc constituer à calculer la valeur du glissement à partir de laquelle on peut utiliser les données pour calculer de façon fiable un glissement cible ou le glissement optimal. Convenons d'appeler ce glissement $G_0$. La figure 2 montre que ce glissement $G_0$ vaut environ 3%. On obtient une allure plus plausible de la courbe $\mu(G)$ en reliant $G_0$ à la partie sensiblement linéaire de la partie croissante de la courbe.

Dès lors, de préférence, le système de contrôle de la stabilité d'un véhicule est tel que l'on procède, avant toutes les opérations exploitant la courbe de variation de $\mu_i$ en fonction de $G_i$, à une correction du départ de ladite courbe en éliminant les premières paires réelles ($\mu_i$, $G_i$) tant que la variation de $\mu_i$ en fonction de $G_i$ n'est pas sensiblement constante et en recherchant le glissement $G_0$ associé à un coefficient d'adhérence nul (ceci n'étant bien entendu pas limitatif) tel que la paire ($0$, $G_0$) et les paires non éliminées ($\mu_i$, $G_i$) sont sensiblement alignées, et utilisant une courbe partant de ($0$, $G_0$) et rejoignant les paires non éliminées ($\mu_i$, $G_i$), de sorte que, pour toute valeur de $G_i$ plus grande que $G_0$, $G_i$ est remplacée par $G_i$ - $G_0$.

Pour cela, par exemple, on utilise un algorithme qui comporte les étapes suivantes:

- éliminer systématiquement toutes les valeurs du glissement associées à un coefficient d'adhérence inférieur à 0,01 ;
- Calculer de façon continue des régressions de $\mu$ et $G$ en fonction du temps, de préférence des régressions exponentielles vu l'allure du pied de la courbe dans l'exemple illustré au moyen de la figure 2 et de la figure 3 :

$$\mu = e^{A^{\mu} \cdot (t - T^{Start}) + B^{\mu}} , G = e^{A^{G} \cdot (t - T^{Start}) + B^{G}}$$

On peut considérer que les valeurs acquises sont représentatives de la réalité lorsque le coefficient d'adhérence estimé ou mesuré est supérieur à 0,1 ou lorsque le glissement dépasse 4%.

La figure 3 illustre la façon de déterminer $G_0$ à partir des courbes donnant les valeurs acquises respectivement pour le coefficient d'adhérence en fonction du temps et pour le glissement en fonction du temps. On cherche la valeur du temps pour laquelle la régression sur la courbe de $\mu$ vaut une certaine valeur, par exemple 0,05 (voir le segment horizontal entre une abscisse nulle et une ordonnée valant 0,05 et la courbe en pointillés). La valeur de $G_0$ sera la valeur de la régression sur la courbe du glissement à cet instant (voir le segment vertical entre le point précédemment obtenu et un point sur la courbe en trait continu, donnant la valeur du glissement $G_0$).

On procède donc, avant toutes les opérations exploitant la courbe de variation de $\mu_i$ en fonction de $G_i$, à une

correction du départ de ladite courbe en éliminant les premières paires réelles ($\mu_i$, $G_i$) tant que la variation de $\mu_i$ en fonction de $G_i$ n'est pas sensiblement constante et en recherchant le glissement $G_0$ associé à un coefficient d'adhérence nul tel que la paire (0, $G_0$)) et les paires non éliminées ($\mu_i$, $G_i$) sont sensiblement alignées, et utilisant une courbe partant de (0 $G_0$) et rejoignant les paires non éliminées ($\mu_i$, $G_i$). Ensuite, dans tous les algorithmes utilisés, pour toute valeur de $G_i$ plus grande que $G_0$, $G_i$ est remplacée par $G_i - G_0$.

On a jusqu'à présent supposé calculées ou estimées des valeurs de $\mu$. Cependant, dans certains cas, le mode d'obtention du coefficient d'adhérence (à partir de l'effort de freinage lui-même estimé sur la base de la pression de freinage compte tenu des caractéristiques particulières chaque véhicule et à partir de la vitesse de roue) ne donne pas de résultat satisfaisant (la courbe $\mu(G)$ calculée est trop plate ou continûment ascendante). On sait que cela n'est pas réaliste. Pour corriger ce problème, une correction numérique du $\mu$ calculé peut être mise en place. Cette correction est basée sur la vitesse d'évolution du glissement en fonction du temps. En effet, si la vitesse de la roue (et donc le glissement) s'emballe de façon rapide, c'est que l'on se trouve dans la zone instable de la courbe $\mu(G)$. Donc la courbe $\mu(G)$ devrait décroître, ce que l'on met à profit de la façon suivante :

$$\mu^{Corr} = \mu^{acquis} \cdot \left[ Max\left( \frac{dG}{dt}; 1 \right) \right]^{-ACorr}$$

où « Acorr » est un coefficient de mise au point et peut être spécifique à chaque algorithme. Par exemple, une bonne valeur pratique s'est avérée être 0.2 pour l'algorithme «Moyen». La figure 4 illustre cette correction. Grâce à cette correction, la courbe $\mu(G)$ retrouve une forme certainement plus conforme à la réalité physique, ce qui permet aux algorithmes de produire des cibles fiables.

Remarquons que, si la valeur du $\mu_{max}$ est en elle-même modifiée par cette correction, tous les algorithmes utilisés se basent sur la forme de la courbe et non sur ses valeurs. Le lecteur est également renvoyé à la demande de brevet précitée où l'on a fait ressortir que l'algorithme « Invariant » permet de calculer une cible de glissement sans même calculer la valeur exacte du coefficient d'adhérence associé, celui-ci étant inutile au bon fonctionnement de l'asservissement en glissement d'une la roue de véhicule.

Dans la demande de brevet précitée, on a démontré la possibilité d'autres applications de l'algorithme « Invariant », par exemple à l'analyse de la poussée de dérive développée par un pneumatique ou bandage élastique dans une zone de fonctionnement proche de la saturation de la poussée de dérive. C'est en raison de la similarité des lois de variation de ces phénomènes physique. De la même façon, la présente invention a des applications plus larges que le contrôle du glissement dans un système de contrôle de la stabilité d'un véhicule. Pour clore le sujet, citons simplement (sans que même cette addition ne soit limitative comme on l'aura compris) que l'invention s'applique aussi à un système de contrôle de la stabilité d'un véhicule visant à prédire la valeur de l'angle de dérive $\delta$ d'un pneumatique où la force latérale (dite aussi « poussée de dérive ») est maximale.

Dans ce cas, le paramètre P est l'angle de dérive $\delta$ du pneumatique et le paramètre caractéristique Q est la poussée de dérive $F^{det}$ du pneumatique. Il s'agit de prévoir quand le pneu atteindra son maximum et donc ne sera plus capable de répondre à sa fonction première qui est de permettre au véhicule de tourner, afin de pouvoir maintenir le fonctionnement du pneumatique à une valeur prédéterminée de la poussée de dérive $F_{det}$, ou pour prévenir le conducteur. Pour maintenir le fonctionnement du pneumatique à une valeur cible prédéterminée, on peut procéder, éventuellement automatiquement, à des interventions préventives de réduction de la vitesse du véhicule pour éviter des situations de conduite critiques (si le véhicule ne tourne pas comme le souhaite le conducteur, il peut en résulter un accident). Pour procéder à bon escient à ces actions, il est là aussi utile d'estimer une cible par un algorithme « Mouillé ».

Dans ce cas, l'invention concerne un système de contrôle de la stabilité d'un véhicule dans lequel le paramètre P est l'angle de dérive $\delta$ du pneumatique et le paramètre caractéristique Q est la poussée de dérive $F^{det}$ du pneumatique, le système comportant des moyens pour contrôler un paramètre « $\xi$ » en fonction des ordres imprimés par le conducteur du véhicule sur son moyen de commande et en fonction des ordres délivrés par un contrôleur de trajectoire, des moyens de modulation du paramètre « $\xi$ » et des moyens pour calculer le paramètre angle de dérive $\delta^{Opt}$ lors de chaque activation des moyens pour imprimer le paramètre « $\xi$ » de la façon suivante :

- Au fur et à mesure de l'acquisition des valeurs de $\delta_i$, calculer la variation par rapport au temps de $\delta$,
- Tant que ladite variation est supérieure à un seuil bas, calculer des coefficients $A_{[wet, p]}$ par calcul direct ou par une régression appropriée de façon à modéliser la variation par rapport au temps de P par une courbe de variation qui est une fonction de ($\delta_i$, $A_{[wet, p]}$),
- Dès que ladite variation est supérieure à un seuil haut, déterminer un glissement cible $\delta^{Cwet}$ en utilisant au moins les dernières valeurs de $A_{[wet, p]}$.

**Revendications**

1. Système de contrôle de la stabilité d'un véhicule, dans lequel un paramètre caractéristique Q du fonctionnement d'un pneumatique du véhicule destiné à rouler sur un sol varie en fonction d'un paramètre P selon une certaine loi, une valeur optimale dudit paramètre P étant imposée par un contrôleur de manière directe ou indirecte de façon à agir sur au moins l'un des éléments choisis dans le groupe comportant le couple de rotation appliqué au pneumatique, l'angle de braquage du pneumatique, l'angle de carrossage du pneumatique et la force verticale appliquée au pneumatique, **caractérisé en ce que** le contrôleur comporte des moyens pour :

   • Au fur et à mesure de l'acquisition des valeurs de $P_i$, calculer la variation par rapport au temps de P,
   • Tant que ladite variation est supérieure à un seuil bas, calculer des coefficients $A_{[wet, p]}$ par calcul direct ou par une régression appropriée de façon à modéliser la variation par rapport au temps de P par une courbe de variation qui est une fonction de ($P_i$, $A_{[wet, p]}$),
   • Dès que ladite variation est supérieure à un seuil haut, déterminer un glissement cible $P^{Cwet}$ en utilisant au moins les dernières valeurs de $A_{[wet, p]}$.

2. Système de contrôle de la stabilité d'un véhicule selon la revendication 1, dans lequel le paramètre P est le glissement G du pneumatique et le paramètre caractéristique Q est le coefficient d'adhérence μ du pneumatique, le système comportant des moyens pour imprimer au pneu un effort longitudinal, des moyens de modulation de l'effort longitudinal et des moyens pour calculer le paramètre glissement $G^{Opt}$ lors de chaque activation des moyens pour imprimer au pneu un effort longitudinal de la façon suivante :

   • Au fur et à mesure de l'acquisition des valeurs de $G_i$, calculer la variation par rapport au temps de G,
   • Tant que ladite variation est supérieure à un seuil bas, calculer des coefficients $A_{[wet, p]}$ par calcul direct ou par une régression appropriée de façon à modéliser la variation par rapport au temps de G par une courbe de variation qui est une fonction de ($G_i$, $A_{[wet, p]}$),
   • Dès que ladite variation est supérieure à un seuil haut, déterminer un glissement cible $G^{Cwet}$ en utilisant au moins les dernières valeurs de $A_{[wet, p]}$.

3. Système de contrôle de la stabilité d'un véhicule selon la revendication 2, dans lequel on utilise une régression linéaire et on calcule les coefficients $A_{wet}$ et $B_{wet}$ de la façon suivants :

   •

$$\frac{dG}{dt} = A^{WET} \cdot G + B^{WET}$$

   et le glissement cible $G^{Cwet}$ est déterminé de la façon suivante :
   •

$$G^{Cwet} = \frac{dG\_tgt - B^{WET}}{A^{WET}} .$$

4. Système de contrôle de la stabilité d'un véhicule selon la revendication 2 dans lequel « dG_tgt » est utilisé comme paramètre de mise au point.

5. Système de contrôle de la stabilité d'un véhicule selon l'une des revendications 2 à 4, dans lequel le dispositif de modulation de l'effort longitudinal agit sur la commande de freinage et on initialise (i=0) les opérations indiquées à chaque début de manoeuvre de freinage.

6. Système de contrôle de la stabilité d'un véhicule selon l'une des revendication 2 à 4, dans lequel le dispositif de modulation de l'effort longitudinal agit sur le couple moteur aux roues et on initialise (i=0) les opérations indiquées à chaque demande de variation du couple moteur supérieure à un seuil de couple prédéterminé.

7. Système de contrôle de la stabilité d'un véhicule selon l'une des revendications 2 à 6, dans lequel on procède, avant toutes les opérations exploitant la courbe de variation de $\mu_i$ en fonction de $G_i$, à une correction du départ de ladite courbe en éliminant les premières paires réelles ($\mu_i$, $G_i$) tant que la variation de $\mu_i$ en fonction de $G_i$ n'est pas sensiblement constante et en recherchant le glissement $G_0$ associé à un coefficient d'adhérence nul tel que la paire (0, $G_0$) et les paires non éliminées ($\mu_i$, $G_i$) sont sensiblement alignées, et utilisant une courbe partant de (0, $G_0$) et rejoignant les paires non éliminées ($\mu_i$, $G_i$), de sorte que, pour toute valeur de $G_i$ plus grande que $G_0$, $G_i$ est remplacée par $G_i$ - $G_0$.

8. Système de contrôle de la stabilité d'un véhicule selon l'une des revendications 2 à 6 dans lequel, lorsque la variation par rapport au temps du glissement devient supérieure à un seuil de variation prédéterminé, on procède, avant toutes les opérations exploitant la courbe de variation de $\mu_i$ en fonction de $G_i$, à une correction de la fin de ladite courbe en remplaçant les valeurs de $\mu_i$ correspondant à des glissements amenant la variation par rapport au temps du glissement au-delà dudit seuil de variation prédéterminé, par des valeurs corrigées comme suit :

$$\mu_i^{Corr} = \mu_i \cdot \left[ Max\left( \frac{dG}{dt};1 \right) \right]^{-ACorr}$$

où « Acorr » est un paramètre prédéterminé.

9. Système de contrôle de la stabilité d'un véhicule selon la revendication 8, dans lequel « Acorr » vaut environ 0,2.

10. Système de contrôle de la stabilité d'un véhicule selon la revendication 8, dans lequel « Acorr » est utilisé comme paramètre de mise au point.

11. Système de contrôle de la stabilité d'un véhicule selon la revendication 1, dans lequel le paramètre P est l'angle de dérive $\delta$ du pneumatique et le paramètre caractéristique Q est la poussée de dérive $F^{det}$ du pneumatique, le système comportant des moyens pour contrôler un paramètre « $\xi$ » en fonction des ordres imprimés par le conducteur du véhicule sur son moyen de commande et en fonction des ordres délivrés par un contrôleur de trajectoire, des moyens de modulation du paramètre « $\xi$ » et des moyens pour calculer le paramètre angle de dérive $\delta^{Opt}$ lors de chaque activation des moyens pour imprimer le paramètre « $\xi$ » de la façon suivante :

- Au fur et à mesure de l'acquisition des valeurs de $\delta_i$, calculer la variation par rapport au temps de $\delta$,
- Tant que ladite variation est supérieure à un seuil bas, calculer des coefficients $A_{[wet, p]}$ par calcul direct ou par une régression appropriée de façon à modéliser la variation par rapport au temps de P par une courbe de variation qui est une fonction de ($\delta_i$, $A_{[wet, p]}$),
- Dès que ladite variation est supérieure à un seuil haut, déterminer un glissement cible $\delta^{Cwet}$ en utilisant au moins les dernières valeurs de $A_{[wet, p]}$.

**Claims**

1. Vehicle stability control system in which a characteristic parameter Q of the functioning of a tyre of the vehicle intended to travel on the ground varies as a function of a parameter P according to a certain law, an optimum value of the said parameter P being imposed by a controller directly or indirectly so as to act on at least one of the elements chosen from the group comprising the rotation torque applied to the tyre, the steering angle of the tyre, the camber angle of the tyre and the vertical force applied to the tyre, **characterised in that** the controller comprises means for:

- as the values of $P_i$ are acquired, calculating the variation in P with respect to time,
- as long as the said variation is above a low threshold, calculating coefficients $A_{[wet, p]}$ by direct calculation or by an appropriate regression so as to model the variation in P with respect to time by a variation curve which is a function of ($P_i$, $A_{[wet, p]}$),
- as soon as the said variation is above a high threshold, determining a target slip $P^{Cwet}$ using at least the last values of $A_{[wet, p]}$.

2. Vehicle stability control system according to Claim 1, in which the parameter P is the slip G of the tyre and the characteristic parameter Q is the coefficient of adhesion $\mu$ of the tyre, the system comprising means for imparting a longitudinal force to the tyre, means of modulating the longitudinal force and means for calculating the slip parameter $G^{Opt}$ at each activation of the means for imparting a longitudinal force to the tyre in the following manner:

> • as the values of $G_i$ are acquired, calculating the variation in G with respect to time,
> • as long as the said variation is above a low threshold, calculating coefficients $A_{[wet, p]}$ by direct calculation or by an appropriate regression so as to model the variation in G with respect to time by a variation curve which is a function of $(G_i, A_{[wet, p]})$,
> • as soon as the said variation is above a high threshold, determining a target slip $G^{Cwet}$ using at least the last values of $A_{[wet, p]}$.

3. Vehicle stability control system according to Claim 2, in which a linear regression is used and the coefficients $A_{wet}$ and $B_{wet}$ are calculated in the following fashion:

   •

$$\frac{dG}{dt} = A^{WET} \cdot G + B^{WET}$$

and the target slip $G^{Cwet}$ is determined as follows:

   •

$$G^{Cwet} = \frac{dG\_tgt - B^{WET}}{A^{WET}}.$$

4. Vehicle stability control system according to Claim 2, in which "dG_tgt" is used as a fine-tuning parameter.

5. Vehicle stability control system according to one of Claims 2 to 4, in which the device for modulating the longitudinal force acts on the braking control and the operations indicated at each start of a braking manoeuvre are initialised (i=0).

6. Vehicle stability control system according to one of Claims 2 to 4, in which the device modulating the longitudinal force acts on the driving torque at the wheels and the operations indicated are initialised (i=0) at each request for a variation in the driving torque above a predetermined torque threshold.

7. Vehicle stability control system according to one of Claims 2 to 6, in which, before all the operations using the curve of variation of $\mu_i$ as a function of $G_i$, a correction of the start of the said curve is carried out by eliminating the first real pairs $(\mu_i, G_i)$ as long as the variation in $\mu_i$ as a function of $G_i$ is not substantially constant and by seeking the slip $G_0$ associated with a zero coefficient of adhesion such that the pair $(0, G_0)$ and the non-eliminated pairs $(\mu_i, G_i)$ are substantially aligned, and using a curve starting from $(0, G_0)$ and joining the non-eliminated pairs $(\mu_i, G_i)$, so that, for any value of $G_i$ greater than $G_0$, $G_i$ is replaced by $G_i - G_0$.

8. Vehicle stability control system according to one of Claims 2 to 6, in which, when the variation in the slip with respect to time becomes greater than a predetermined variation threshold, a correction to the end of the said curve is carried out, before all the operations using the curve of variation of $\mu_i$ as a function of $G_i$, by replacing the values of $\mu_i$ corresponding to slips bringing the variation in the slip with respect to time beyond the said predetermined variation threshold, by corrected values as follows:

$$\mu_i^{Corr} = \mu_i \cdot \left[ Max\left(\frac{dG}{dt}; 1\right) \right]^{-ACorr}$$

where "Acorr" is a predetermined parameter.

9. Vehicle stability control system according to Claim 8, in which "Acorr" is equal to approximately 0.2.

**10.** Vehicle stability control system according to Claim 8, in which "Acorr" is used as a fine-tuning parameter.

**11.** Vehicle stability control system according to Claim 1, in which the parameter P is the drift angle $\delta$ of the tyre and the characteristic parameter Q is the drift thrust $F^{det}$ of the tyre, the system comprising means for controlling a parameter "$\xi$" according to instructions entered by the driver of the vehicle on his control means and according to instructions delivered by a path controller, means of modulating the parameter "$\xi$" and means for calculating the drift angle parameter $\delta^{Opt}$ at each activation of the means for entering the parameter "$\xi$" in the following fashion:

- as the values of $\delta_i$ are acquired, calculating the variation in $\delta$ with respect to time,
- as long as the said variation is above a low threshold, calculating coefficients $A_{[wet, p]}$ by direct calculation or by an appropriate regression so as to model the variation in P with respect to time by a variation curve which is a function of $(\delta_i, A_{[wet, p]})$,
- as soon as the said variation is above a high threshold, determining a target slip $\delta^{Cwet}$ using at least the last values of $A_{[wet, p]})$,

**Patentansprüche**

**1.** System zur Stabilitätsregelung eines Fahrzeugs, bei dem ein charakteristischer Parameter Q für die Funktion eines Reifens eines Fahrzeugs zum Abrollen auf einem Boden sich gemäß einer bestimmten Gesetzmäßigkeit in Abhängigkeit von einem Parameter P ändert, wobei ein optimaler Wert des Parameters P durch einen Controller direkt oder indirekt vorgegeben wird, um auf wenigstens eines der Elemente aus der Gruppe einzuwirken, die umfasst: Drehmoment, das auf den Reifen wirkt, Einschlagwinkel des Reifens, Radsturzwinkel des Reifens und die vertikal auf den Reifen wirkende Kraft,
**dadurch gekennzeichnet, dass** der Controller Einrichtungen umfasst zum:

- Berechnen der Änderung von P in Bezug auf die Zeit je nach Erfassung der Werte $P_i$,
- solange die Änderung größer als eine untere Schwelle ist, Berechnen von Koeffizienten $A_{[wet,p]}$ durch direkte Berechnung oder durch eine geeignete Regression, um die Änderung von P in Bezug auf die Zeit durch eine Änderungskurve zu erzeugen, die eine Funktion von $(P_i, A_{[wet, p]})$ ist,
- sobald die Änderung größer ist als eine obere Schwelle, Bestimmen eines Zielwertes für den Schlupf $P^{Cwet}$ unter Verwendung wenigstens der letzten Werte von $A_{[wet, p]}$.

**2.** System zur Stabilitätsregelung eines Fahrzeugs nach Anspruch 1, bei dem der Parameter P der Schlupf G des Reifens ist und der charakteristische Parameter Q der Reibungskoeffizient $\mu$ des Reifens ist, wobei das System Einrichtungen umfasst, um dem Reifen eine Längskraft vorzugeben, Einrichtungen zum Modulieren der Längskraft und Einrichtungen, um bei jeder Aktivierung der Einrichtungen, mit denen dem Reifen eine longitudinale Kraft vorgegeben wird, den Schlupfparameter $G^{Opt}$ auf folgende Art und Weise zu berechnen:

- Berechnen der Änderung von G in Bezug auf die Zeit je nach Erfassung der Werte $G_i$,
- solange die Änderung größer als eine untere Schwelle ist, Berechnen von Koeffizienten $A_{[wet, p]}$ durch direkte Berechnung oder durch eine geeignete Regression, um die Änderung von G in Bezug auf die Zeit durch eine Änderungskurve zu erzeugen, die eine Funktion von $(G_i, A_{[wet, p]})$ ist,
- sobald die Änderung größer ist als eine obere Schwelle, Bestimmen eines Zielwertes für den Schlupf $G^{Cwet}$ unter Verwendung wenigstens der letzten Werte von $A_{[wet, p]}$.

**3.** System zur Stabilitätsregelung eines Fahrzeugs nach Anspruch 2, bei dem eine lineare Regression verwendet wird und man die Koeffizienten $A_{wet}$ und $B_{wet}$ auf folgende Art und Weise berechnet:

- 

$$\frac{dG}{dt} = A^{WET} \cdot G + B^{WET}$$

und der Zielwert für den Schlupf $G^{Cwet}$ sich wie folgt ergibt:

-

$$G^{Cwet} = \frac{dG\_tgt - B^{WET}}{A^{WET}}.$$

**4.** System zur Stabilitätsregelung eines Fahrzeugs nach Anspruch 2, bei dem "dG_tgt" als Anpassungsparameter verwendet wird.

**5.** System zur Stabilitätsregelung eines Fahrzeugs nach einem der Ansprüche 2 bis 4, bei dem die Modulationseinrichtung für die Längskraft auf die Bremsvorgabe einwirkt und man die angegebenen Operationen bei jedem Beginn eines Bremsmanövers initialisiert (i = 0).

**6.** System zur Stabilitätsregelung eines Fahrzeugs nach einem der Ansprüche 2 bis 4, bei dem die Modulationseinrichtung für die Längskraft auf das Motormoment auf die Räder einwirkt und man die angegebenen Operationen bei jedem Beginn einer Vorgabe für die Änderung des Motormoments auf über einen vorgegebenen Schwellenwert für das Moment initialisiert (i = 0).

**7.** System zur Stabilitätsregelung eines Fahrzeugs nach einem der Ansprüche 2 bis 6, bei dem vor allen Operationen, bei denen die Änderungskurve von $\mu_i$ in Abhängigkeit von $G_i$ ausgewertet wird, eine Korrektur am Beginn der Kurve vorgenommen wird, indem die ersten realen Paare ($\mu_i$, $G_i$) eliminiert werden, so lange die Änderung von $\mu_i$ in Anhängigkeit von $G_i$ nicht im Wesentlichen konstant ist, und indem der Schlupf $G_0$ zu einem Reibungskoeffizienten null gesucht wird, so dass das Paar (0, $G_0$) und die nicht eliminierten Paare ($\mu_i$, $G_i$) im Wesentlichen ausgerichtet sind, und wobei eine Kurve verwendet wird, die von (0, $G_0$) ausgeht und die nicht eliminierten Paare ($\mu_i$, $G_i$) verbindet, so dass für jeden Wert von $G_i$, der größer als $G_0$ ist, $G_i$ ersetzt wird durch $G_i$ - $G_0$.

**8.** System zur Stabilitätsregelung eines Fahrzeugs nach einem der Ansprüche 2 bis 6, bei dem dann, wenn die Änderung des Schlupfes in Bezug auf die Zeit größer als ein vorgegebener Schwellenwert ist, man vor allen Operationen, bei denen die Kurve der Änderung von $\mu_i$ in Abhängigkeit von $G_i$ ausgewertet wird, eine Korrektur am Ende der Kurve vornimmt, indem man die Werte von $\mu_i$, die denjenigen Schlupfwerten entsprechen, welche die Änderung des Schlupfwertes in Bezug auf die Zeit über den vorgegebenen Schwellenwert für die Änderung anheben, durch die folgenden korrigierten Werte ersetzt:

$$\mu_i^{Corr} = \mu_i \cdot \left[ Max\left(\frac{dG}{dt};1\right) \right]^{-ACorr},$$

wobei "Acorr" ein vorgegebener Parameter ist.

**9.** System zur Stabilitätsregelung eines Fahrzeugs nach Anspruch 8, bei dem "Acorr" einen Wert von etwa 0,2 annimmt.

**10.** System zur Stabilitätsregelung eines Fahrzeugs nach Anspruch 8, bei dem "Acorr" als Anpassungsparameter verwendet wird.

**11.** System zur Stabilitätsregelung eines Fahrzeugs nach Anspruch 1, bei dem der Parameter P der Driftwinkel $\delta$ des Reifens ist und der charakteristische Parameter Q die Driftlängskraft $F^{det}$ des Reifens ist, wobei das System Einrichtungen umfasst, um einen Parameter "$\xi$" in Abhängigkeit von Befehlen, die von dem Fahrer des Fahrzeugs über seine Eingabeeinrichtung eingegeben wurden, und in Abhängigkeit von Befehlen, die durch einen Trajektorien-Controller ausgegeben werden, zu steuern, Einrichtungen zum Modulieren des Parameters "$\xi$" und Einrichtungen, um den Parameter des Driftwinkels $\delta^{Opt}$ jedes Mal, wenn die Einrichtungen zum Vorgeben des Parameters "$\xi$" aktiviert werden, auf folgende Art zu berechnen:

• Berechnen der Änderung von $\square$ in Bezug auf die Zeit je nach Erfassung der Werte $\square_i$,
• solange die Änderung größer als eine untere Schwelle ist, Berechnen von Koeffizienten $A_{[wet, p]}$ durch direkte Berechnung oder durch eine geeignete Regression, um die Änderung von P in Bezug auf die Zeit durch eine Änderungskurve zu erzeugen, die eine Funktion von ($\square_i$, $A_{[wet, p]}$) ist,
• sobald die Änderung größer ist als eine obere Schwelle, Bestimmen eines Zielwertes für den Schlupf $\square^{Cwet}$

unter Verwendung wenigstens der letzten Werte von $A_{[wet, p]}$.

Figure 1

Figure 2

Figure 3

Figure 4